# EUROPEAN PATENT SPECIFICATION

(11) **EP 0 546 223 B1**
(45) Date of publication and mention of the grant of the patent: **29.05.1996**
(21) Application number: 91311474.0
(22) Date of filing: 10.12.1991
(51) Int. Cl.: F16K 15/14, F16K 15/02

(54) **Fluid flow control valve**
Durchflussregelventil
Soupape de régulation de débit

(43) Date of publication of application: 16.06.1993
(73) Proprietor: Kiyohara, Masako, Kumamoto-shi Kumamoto-ken (JP)
(72) Inventor: Nakazawa, Masahiko, Tokyo (JP); Matsumoto, Hisayoshi, Urawa-shi, Saitama-ken (JP)
(74) Representative: Daley, Michael John

(56) References cited:
- GB-A- 487 908
- US-A- 4 556 086
- US-A- 4 749 003
- US-A- 4 856 555

## Description

The present invention is related to a check valve for insertion into a fluid, liquid or gas, flow line.

The conventional line check valve body has a valve operation space with which an inlet passage and outlet passage are in communication. A valve disk is mounted at a valve seat formed at the opening mouth of the inlet passage in such a manner that the valve disk is allowed to slide to be rested on and move away from the valve seat, with the valve disk being biassed to its valve seat by spring means usually a coil spring.

However, such conventional line check valves have a small area for receiving the operating pressure. So in a case where the inlet volume or the inlet pressure to the inlet passage is small, the valve may not operate effectively and reliably.

Additionally, adjustment of the spring may be required and this is difficult with an enclosed spring.

The area of the sealing portion and the area of the differential pressure receiving portion are almost the same. If the area of the sealing portion is big, the valve has good responsiveness but sealing capacity may be compromised.

Sliding of the valve body, under the influence of a coil spring tends to generate abrasive powder. In addition, since the number of parts employed in the valve operation space is great, the internal structure is complicated and fluid residues such as gas residues may be generated. Therefore, the conventional line check valve is not suitable for fluid transportation lines of the manufacturing devices of semiconductors and pharmaceuticals, etc., or vacuum lines of vacuum apparatuses which require a higher clean degree.

Further, when the differential pressure surpasses the resisting force of the springs, the fluids start to flow. When the fluids start to flow, differential pressure drops and the valves close due to the resisting force of the springs. As a result, the so-called chattering phenomenon occurs.

US-A-4 556 086 discloses a low pressure back-check valve comprising a valve body, a valve operation space provided in the valve body and enclosed by an upstream surface into which an inlet passage opens and a downstream surface with an opening for an outlet passage, a ring-shaped static seal provided on the upstream surface, a diaphragm secured to one of the surfaces and which has a seal surface movable with it positioned opposite the static seal surface, and a sealing ring being secured to the static seal surface, the arrangement being that when fluid flows in the inlet passage the diaphragm is moved to separate the seal from surface whilst reverse flow presses the seal against the surface.

The present invention is characterised in that the downstream side wall surface has a pressure receiving surface to be engaged with the downstream side face of the circular body while the upstream side wall has a reverse pressure receiving surface to be engaged with the upstream side face of the circular body.

If the central part of the diaphragm is secured to the wall surface, the movable seal is provided at the circumferential part of the diaphragm and the opening mouth of the inlet passage is positioned on the inner side of the static seal surface on the upstream side wall surface. In this arrangement a second pressure receiving surface is provided on the downstream side wall surface to engage the seal.

If the circumferential part of the diaphragm is secured to the wall surface, the diaphragm is in the ring shape and is provided with the movable seal at the centre thereof, with the opening mouth of the inlet passage being positioned on the outer side of the static seal surface.

If a fluid flows into the inlet passage, the differential pressure of both sides of the diaphragm deforms the diaphragm, thereby separating the movable seal from the static seal surface. As a result, the two passages are connected with each other and the fluid flows from the inlet passage to the outlet passage.

If a reverse flow occurs in the outlet passage, the diffferential pressure of both sides of the diaphragm deforms the diaphragm reversely to the case above mentioned, thereby putting the movable seal in pressed contact with the static seal surface via the seal ring. As a result, the two passages are disconnected by the contact of one seal member with the seal ring secured to the other seal member, thereby inhibiting a reversed flow from the outlet passage to the inlet passage.

The present invention will now be described by way of example and with reference to the accompanying draswings wherein:-
Figures 1 and 2 are sectional views of a first embodiment of the line check valve according to the present invention respectively in the open and closed condition and
Figure 3 is a sectional view showing another embodiment of the invention in the open condition.

The line check valve of this embodiment comprises a valve body , a diaphragm 2 mounted in said valve body 1 and sealing ring 3 mounted on said diaphragm 2.

An inlet passage 1a and outlet passage 1b are formed in alignment through valve body 1. Within the central portion of the valve body 1, a space 6 for valve operation surrounded by the upstream side wall surface 4 and downstream side wall surface 5 has been provided on the upstream side wall surface 4, a circular reverse pressure receiving surface 4a and a ring-shaped static seal surface 4b positioned on the circumferential side thereof are provided. The reverse pressure receiving surface 4a and the static seal surface 4b constitute a continuous, flat surface which extends in a direction rectangularly relative to the inlet passage 1a. The inlet passage 1a has an opening mouth 7 on the reverse pressure receiving surface 4a. On the downstream side wall surface 5 are provided a first and second normal pressure receiving surfaces 5a and 5b which are positioned opposite the reverse pressure receiving surface 4a and the static seal surface 4b respectively. The first normal pressure receiving surface 5a is a conical surface with its top located near and opposite the centre of the reverse pressure receiving surface 4a. The second normal pressure receiving surface 5b is a flat, ring shaped surface and extends in a direction rectangularly relative to the outlet passage 1b. The second normal pressure receiving surface 5b has an opening mouth 8 of the outlet passage 1b.

The diaphragm 2 comprises a circular body 2a made of a thin metal sheet and a metal ring-shaped movable seal 2b secured to the circumference of the body 2a and is placed in a valve operation space 6 with its centre being fixed. That is, welding and securing of the centre of the circular body 2a onto the top of the first normal pressure receiving surface 5a makes it possible for the diaphragm 2 to be deformed so that the movable seal 2b can be moved back and forth in an axis line direction rectangularly relative to the static seal surface 4b. The diaphragm effectively pivots about the annulus of its securement to its supporting wall. The diaphragm is non-resilient having no inherent bias either to the open or closed position; it pivots or hinges as described in response to fluid flow. This deformation is generated by a difference between the pressures which act on the two sides of the diaphragm 2. In the state where the difference in the pressure does not exist (which state is referred to as "nonload state" hereinafter), the diaphragm 2 is retained in the original, non-deformed flat shape. The circular body 2a is preferably as thin as possible to improve responsiveness. Even if the circular body 2a is reduced to the minimum thickness, the overall rigidity is sufficiently maintained thanks to the existence of the movable seal 2b. The central, welded part of the circular body 2a is raised to form a tube in order to avoid concentration of a curve stress to the welded part.

The seal ring 3 is ring-shaped and is made of a material such as rubber, plastic and the like, which has an elasticity greater than a certain level and is forced, under pressure, into and retained in the dovetail shaped ring groove 2c formed on the movable seal 2b.The deformation of the diaphram 2 makes the seal ring 3 contact and move away from the static seal surface 4b. In the nonload state where the diaphram 2 is kept in the original non-deformed flat shape, the seal ring 3 is in contact with, but not pressed against the static seal surface 4b. Hence, the seal ring 3 does not seal a space between the static seal furface 4b and the movable seal 2b of the diaphram 2. Therefore, since the seal ring 3 is in close contact with the static seal surface 4b only when the reverse flow occurs, there is no fear that the seal ring 3 may adhere to the static seal surface 4b even if the seal ring 3 is made of rubber or the likes. The seal ring 3 may be molded into the ring shape and fitted in the ring groove 2c or may be cast into the ring groove 2c. Or the seal ring 3 can be fixed on the movable seal 2b by using adhesives. The last method is not applicable in a case where melting-out of volatile solvent gives an undesirable effect.

A fixing ring (not shown) made of a steel wire or the like may be imbedded inside the seal ring 3.

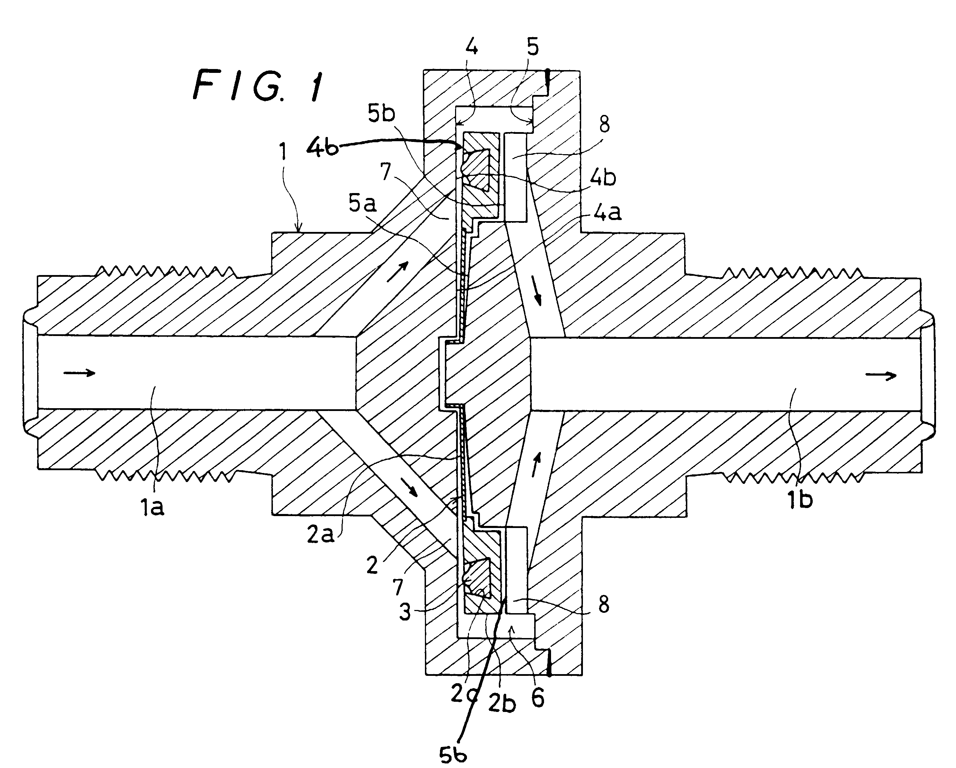

In the line check valve structured as mentioned above, if a fluid flows into the inlet passage 1a, the circular body 2a of the diaphram 2 is deformed in the direction of the first normal pressure receiving surface 5a by a difference between the pressure acting on the surface of the diaphram 2 facing the inlet passage 1a and the pressure on the surface facing the outlet passage 1b. This separates the seal ring 3 from the static seal surface 4b. As a result, the two passages 1a and 1b are connected, thereby allowing the fluid to flow from the inlet passage 1a to the outlet passage 1b (see Fig. 1). It depends on the flow rate of the fluid how much the seal ring is distanced from the static seal surface 4b.

Even if the inflow volume or inflow pressure in the inlet passage 1a is small and the difference between the pressure acting on the surface of the diaphram 2 facing the inlet passage 1a and the pressure on the other surface facing the outlet passage 1b is small, the seal ring 3 is separated from the static surface 4b without fail since the pressures act on the almost entire surfaces ( except for the fixed central part) of the diaphram 2 having a great surface area and the seal ring 3 is provided on the diaphram 2 having no spring force. On the other hand, if the flow rate is great or an impact pressure is generated, the circular body 2a and the movable seal 2b of the diaphram 2 are engaged with the first and second pressure receiving surfaces 5a, 5b. As a result, a further deformation of the diaphram 2 is prevented, thereby stopping an excessive load from acting on the diaphram 2.

That is to say, in a case where the flow rate or the fluid pressure is within a certain range, the diaphram 2 is deformed to form between the seal ring 3 and the static seal surface 4b a space the extent of which corresponds to how much the flow rate is. However, if the flow rate or fluid pressure exceeds the above mentioned range, no deformation greater than a certain extent occurs.

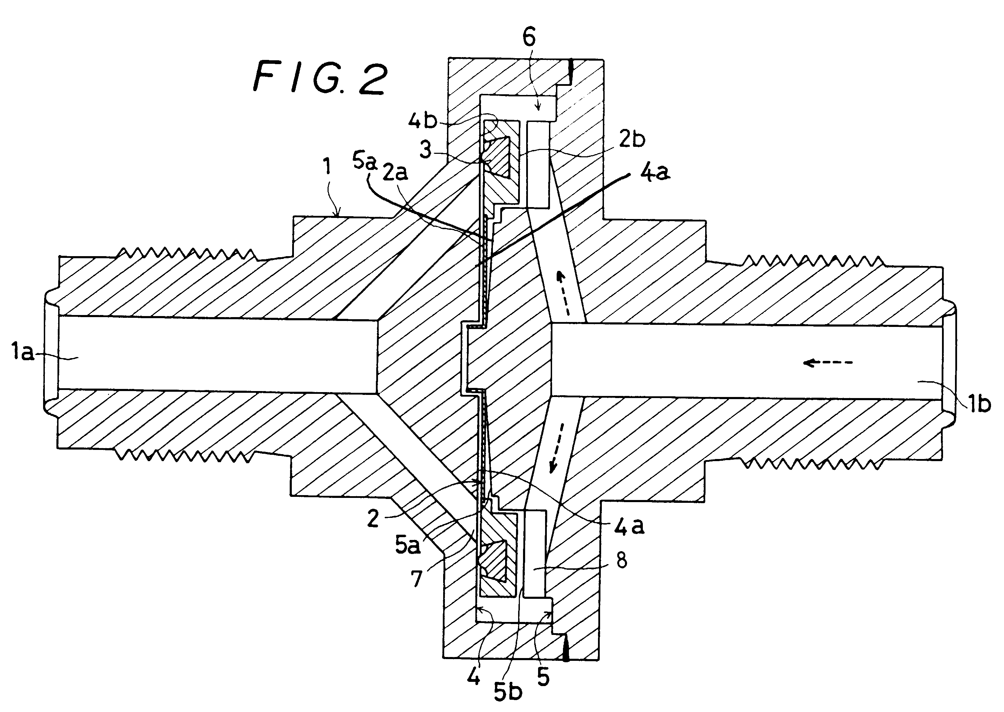

When the fluid flows reversely, the circular body 2a of the diaphram 2 is deformed in the direction of the reverse pressure receving surface 4a by a difference between the pressure acting on the surface facing the inlet passage la and the pressure on the surface facing the outlet passage 1b, thereby causing the seal ring 3 to be in pressed contact with the static seal surface 4b. As a result, the space between the circumference of the diaphram 2 and the static seal surface 4b is closed and sealed by the seal ring 3 and, hence, the inlet and outlet passages 1a and 1b are disconnected, thereby preventing the reverse flow from the outlet passage 1b to the inlet passage la (see Fig. 2).

Even if the difference between the pressure acting on the surface of the diaphram facing the inlet passage 1a and the pressure on the surface facing the outlet passage 1b is small, the great pressure receiving area makes it possible for the seal ring 3 to have a sufficent sealing capacity with the result that the superior sealing effect is demonstrated. On the other hand, if the reverse pressure acting on the diaphram 2 is excessive or an impact pressure occurs, the circular body 2a of the diaphram is engaged with the reverse pressure receiving surface 4a and, as a result, a further deformation thereof is stopped, thereby preventing an excessive load from acting on the diaphram 2. Accordingly, the pressure resistance performance is remarkably improved.

By the way, a very small valve operation space 6 in communication with the passages 1a and 1b is enough as long as it permits the deformation of the diaphram 6 therein and only the diaphram equipped with the seal ring 3 is installed in the valve operation space 6. As a result, no spots likely to trap fluid residues such as gas residues are formed in the valve operation space 6.

The line check valve according to the present invention is not limited to the embodiment mentioned above, and can be modified appropriately within the range not exceeding the fundamental principles of the present invention.

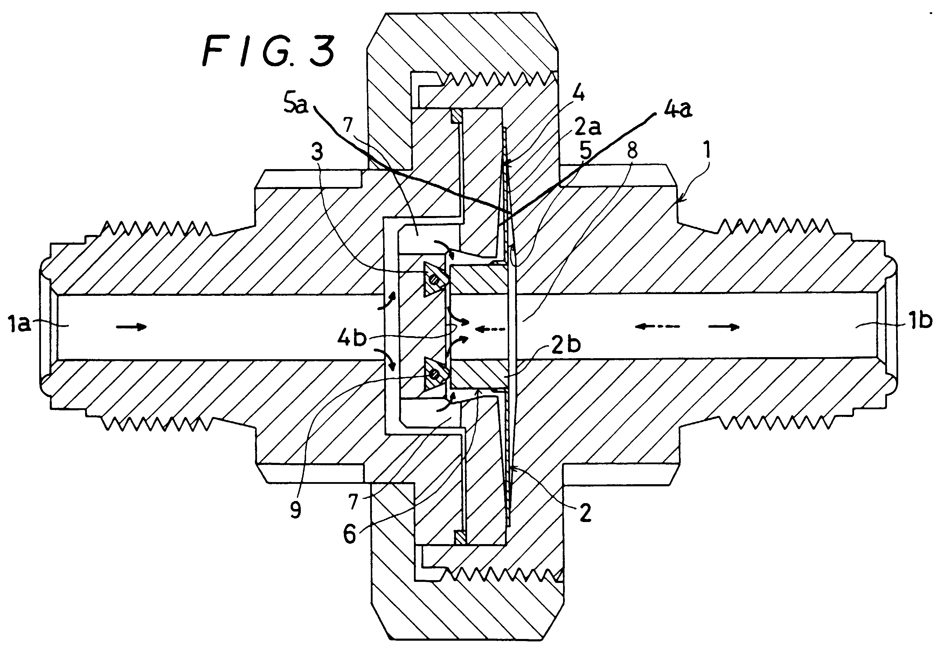

For example, as shown in Fig. 3, it is possible to fix the circumferential part of the diaphram 2 to the wall surfaces 4 and 5, and mount the movable seal 2b at the central part thereof.

That is to say, according to the check valve shown in Fig. 3, the circular body 2a is formed in a ring shape, a seal ring 2 b, i.e. a tube shaped movable seal is welded to the central part of the circular body 2a and and the seal ring 3 is fixed to the static seal surface 4b. The inlet passage 1a has the opening mouth 7 on the outer side of the static seal surface

In Fig. 3, a numeral 9 designates a stainless steel made fixing ring embedded inside the seal ring 3. The seal ring 3 ray be formed with the fixing ring placed inside. As a result, the seal ring 3 is fixed inside the ring groove 2c and is not allowed to pop out.

As explained above, the check valve of the present invention functionally separates the diameter of the seal ring and the differential pressure receiving area and has a great area on which the fluid pressure acts for the operation of the movable seal. In addition, it does not employ any springs. As a result, the check exhibits an excellent operational accuracy and responsiveness and is capable of always demonstrating a superior function without occurrence of the chattering phenomenon.

Further, since the diaphragm has some flexibility, the position of the diaphragm can be automatically corrected even if it is initially displaced. As a result, the movable seal closely adheres to the seal ring. If the excessively big fluid pressure in the normal direction is applied, the diaphragm is engaged with and supported by the first normal pressure receiving surface. If the excessively big reverse pressure is applied, the movable seal squeezes and deforms the seal ring, and is engaged with and supported by the upper stream side wall surface. As a result, the deformation of the disphragm and the damages to the seal ring are prevented.

Since no abrasion powder is produced and the spots for trapping the fluid residues such as gas residues are virtually eliminated, this line check valve can be suitably employed in the fluid transportation line of the semiconductor manufacturing device, the vacuum line of the vacuum apparatus and the likes all requiring a high degree of cleanness.

Additionally, since this valve does not carry the springs which need ajustment of the pulling (or pushing) force and has a simple structure, it excels in assembling and operation and the performance does not change even if the direction in which the valve is installed is altered.

## Claims

1. A check valve comprising a valve body (1), a valve operation space (6) provided in the valve body (1) and enclosed by an upstream surface (4) into which an inlet passage (la) opens and a downstream surface (5) with an opening for an outlet passage (1b), a ring-shaped static seal (4b) provided on the upstream surface (4), a diaphragm (2) secured to one of the surfaces (4) or (5) and which has a circular body (2a) and a seal (2b) movable with it positioned opposite the static seal surface (4b), and a sealing ring (3) being secured to the movable seal (2b) or the static seal surface (4b), the arrangement being that when fluid flows in the inlet passage the diaphragm is moved to separate the seal (2b) from surface (4b) whilst reverse flow presses the seal (2b) against the surface (4b), characterised in that the downstream side wall surface (5) has a pressure receiving surface (5a) to be engaged with the downstream side face of the circular body (2a) while the upstream side wall (4) has a reverse pressure receiving surface (4a) to be engaged with the upstream side face of the circular body (2a).

2. A check valve according to Claim 1 wherein the diaphragm has the central part secured and the movable seal (2b) peripherally disposed, a second pressure receiving surface (5b) being provided on the downstream side wall surface (5) to engage the seal (2b).

3. A check valve according to Claim 1 wherein the diaphragm (2) has the circumferential part secured and the movable seal (2b) is positioned in the centre thereof.

## Patentansprüche

1. Rückschlagventil mit einem Ventilgehäuse (1), mit einer Ventilkammer (6) im Ventilgehäuse (1) zwischen einer strömungsaufwärts liegenden Fläche (4), in die ein Einlaßkanal (1a) mündet und einer strömungsabwärts liegenden Fläche (5) mit einer Öffnung für einen Auslaßkanal (1b), mit einer ringförmigen statischen Dichtungsfläche (4b) in der Zuordnung zu der strömungsaufwärts liegenden Fläche (4) und mit einer Membrane (2) in fester Zuordnung zu einer der beiden Flächen (4 oder 5) mit einem scheibenförmigen Grundkörper (2a) und einer Dichtung (2b), die mit ihr verstellbar gegenüber der statischen Dichtungsfläche (4b) angeordnet ist, wobei die Anordnung so getroffen ist, daß bei Fluideinströmung durch den Einlaßkanal die Membrane zum Abheben der Dichtung (2b) von der statischen Dichtungsfläche (4b) veranlaßt wird, während die Gegenströmung die Dichtung (2b) gegen die statische Dichtungsfläche (4b) dicht anlegt, dadurch gekennzeichnet, daß der strömungsabwärts liegenden Fläche (5) eine Druck aufnehmende Teilfläche (5a) zugeordnet ist, mit der die strömungsabwärts gerichtete Seite des scheibenförmigen Grundkörpers (2a) der Membrane (2) zusammenwirkt, während der strömungsaufwärts liegenden Fläche (4) eine Druck in umgekehrter Richtung aufnehmende Teilfläche (4a) zugeordnet ist, mit der die strömungsaufwärts gerichtete Seite des scheibenförmigen Grundkörpers (2a) der Membrane (2) zusammenwirkt.

2. Rückschlagventil nach Anspruch 1, bei dem die Membrane einen ihr zugeordneten, von der verstellbaren Dichtung (2b) umgebenen zentralen Teil aufweist sowie eine zweite Druck aufnehmende Fläche (5b) der strömungsabwärts liegenden Fläche (5) zum Zusammenwirken mit der Dichtung (2b) zugeordnet ist.

3. Rückschlagventil nach Anspruch 1, bei dem die Membrane (2) einen ihr zugeordneten Umfangsabschnitt aufweist, und die verstellbare Dichtung in deren Zentrum angeordnet ist.

## Revendications

1. Soupape de régulation de débit comprenant un corps de soupape (1), un espace de fonctionnement de soupape (6) prévu dans le corps de soupape (1) et entouré par une surface amont (4) dans laquelle un passage d'entrée (la) s'ouvre et une surface aval (5) avec une ouverture pour un passage de sortie (1b), un joint statique en forme d'anneau (4b) prévu sur la surface amont (4), un diaphragme (2) fixé à une des surfaces (4) ou (5) et qui a un corps circulaire (2a) et un joint (2b) mobile avec lui positionné à l'opposé de la surface de joint statique (4b) et un anneau d'étanchéité (3) fixé au joint mobile (2b) ou à la surface de joint statique (4b), l'agencement étant tel que, lorsque le fluide circule dans le passage d'entrée, le diaphragme est déplacé pour séparer le joint (2b) de la surface (4b) alors que le flux inverse presse le joint (2b) contre la surface (4b), caractérisée en ce que la surface de paroi en aval (5) a une surface de réception de pression (5a) à mettre en prise avec la surface en aval du corps circulaire (2a) tandis que la paroi en amont (4) a une surface de réception de pression inverse (4a) à mettre en prise avec la face en amont du corps circulaire (2a).

2. Soupape de régulation de débit selon la revendication 1, dans laquelle le diaphragme a la partie centrale fixée et le joint mobile (2b) placé de manière périphérique, une seconde surface de réception de pression (5b) étant prévue sur la surface de paroi en aval (5) pour se mettre en prise avec le joint (2b).

3. Soupape de régulation de débit selon la revendication 1, dans laquelle le diaphragme (2) a la partie circonférentielle fixée et le joint mobile (2b) est positionné en son centre.
